## Europäisches Patentamt
## European Patent Office
## Office européen des brevets

(19)

(11) Publication number: **0 013 503**
**A1**

(12)

# EUROPEAN PATENT APPLICATION

(21) Application number: **79302996.8**

(22) Date of filing: **20.12.79**

(51) Int. Cl.³: **A 63 B 45/00**
**A 63 B 39/08**

(30) Priority: **09.01.79 US 2206**

(43) Date of publication of application:
**23.07.80 Bulletin 80/15**

(84) Designated Contracting States:
**DE FR GB**

(71) Applicant: **ALBANY INTERNATIONAL CORP.**
**1 Sage Road**
**Menands New York 12201(US)**

(72) Inventor: **Parker, Roy B.**
**Box 284A Cobbossee**
**Monmouth, Maine 04259(US)**

(74) Representative: **Jennings, Roy Alfred et al,**
**GILL, JENNINGS & EVERY 53/64 Chancery Lane**
**London WC2A 1HN(GB)**

(54) **Method of covering tennis balls and tennis balls made by this method.**

(57) A method of adhering a textile fabric tennis ball cover (12,13) to a tennis ball core (22) comprises providing yarns (16) made from a hot-melt adhesive in the cover fabric, fitting the cover around the core, causing the hot-melt adhesive yarns (16) to melt and come into close contact with the core and the cover, and allowing the molten adhesive to re-solidify so that it adheres to the cover and the core of the tennis ball with a high degree of tenacity. This method requires few steps, and is in consequence much quicker, than the conventional method using a two-part solvent based latex adhesive between the cover and the core.

Fig.6

EP 0 013 503 A1

Croydon Printing Company Ltd.

ALBANY INTERNATIONAL CORP.          GJE 4079/163

- 1 -

Method of covering Tennis Balls

This invention relates to methods of adhering textile fabric tennis ball covers to tennis ball cores.

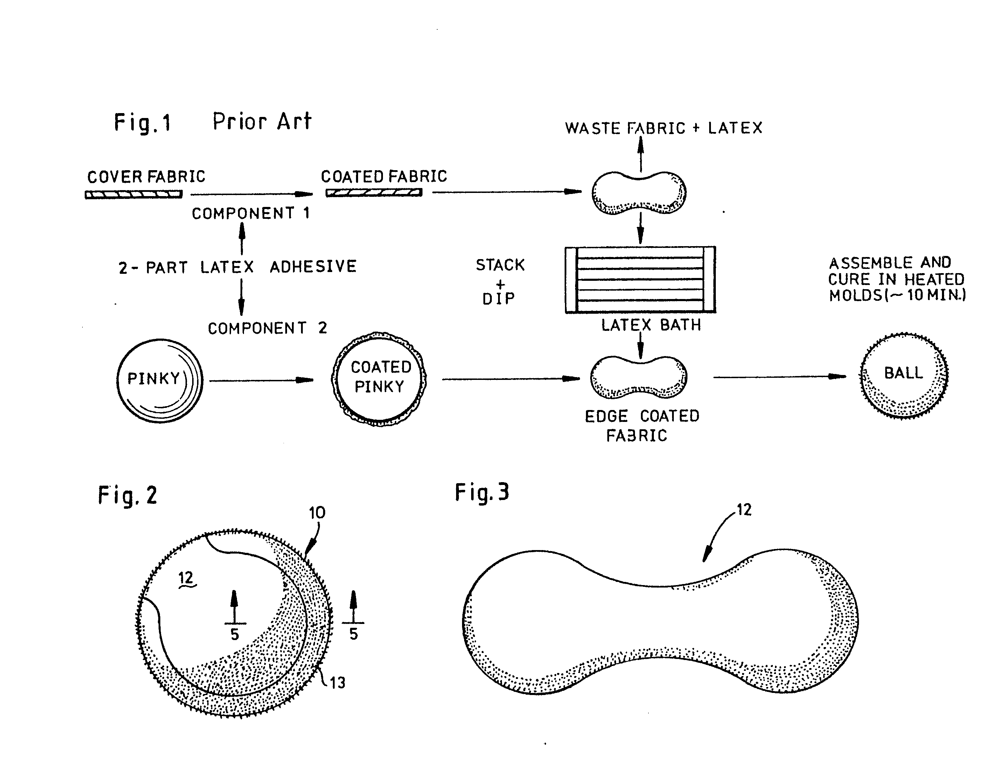

A commercial prior art method of adhering a textile fabric cover to a tennis ball core is shown diagrammatically in Figure 1 of the accompanying drawings. In this conventional method, fabric from which the covers are made is coated with one component of a two-part latex adhesive, and the core, which is commonly called the pinky, is coated with the second component of the adhesive. An array of identical dumbbell-shaped pieces are cut from the adhesive-coated fabric and the remaining fabric is removed as waste. The dumbbell-shaped pieces are stacked in register with each other and the stack is clamped and dipped in a latex bath so that the edges of the individual pieces are also coated. After separation of this stack of pieces, the adhesive-coated core and two of the adhesive-backed and edge seam-coated dumbbell-shaped pieces are assembled to form a complete ball. The complete balls are cured in heated moulds for approximately ten minutes, during which time the adhesive bond between the cover and the core is developed, and a seam between the edges of the pieces is formed. The overall process involves three distinct coating and drying steps, an elaborate and time-consuming assembly and disassembly routine for the stack of pieces, and a slow curing operation for the complete ball.

The object of the present invention is to simplify the covering of tennis balls by reducing the number of steps required and eliminating the need for solvent based adhesives, since the use of solvents requires an additional step of driving the solvent from the adhesive into the atmosphere. What is more, the release of solvents into the atmosphere is of course an undesirable occurrence. In addition, the slow curing operation is eliminated.

Methods such as that just described are disclosed in U.S. Patents Nos. 2,652,094; 3,558,413; and 3,684,284; and also in British Patent No. 1,152,240.

According to the present invention a method of adhering a textile fabric tennis ball cover to a tennis ball core comprises providing a tennis ball core, providing a textile fabric tennis ball cover of a size and shape to fit closely around and cover the core, the fabric including adhesive yarns fabricated from a hot-melt adhesive composition, fitting the cover around the core, causing the adhesive yarns to melt and flow into contact with the cover and the core; and allowing the molten yarns to solidify, whereby the cover is adhered to the core.

The term "core" as used herein is synonymous with the term "pinky" as commonly used in the art.

An example of a method in accordance with the invention will now be described with reference to the accompanying drawings in which:-

Figure 1 is a diagrammatic representation of a prior art method of covering a tennis ball as already described;

Figure 2 is a side view of a tennis ball, covered by the method in accordance with the invention;

Figure 3 is a view of a portion of a cover to be adhered to a tennis ball core by the method in accordance with the invention;

Figure 4 is a diametric section through the tennis ball cover being prepared for use in the method in accordance with the invention;

Figure 5 is a sectional view on the line 5-5 of Figure 2 of a portion of the tennis ball; and

Figure 6 is a view similar to Figure 2, but with part of the ball cut away to show internal details.

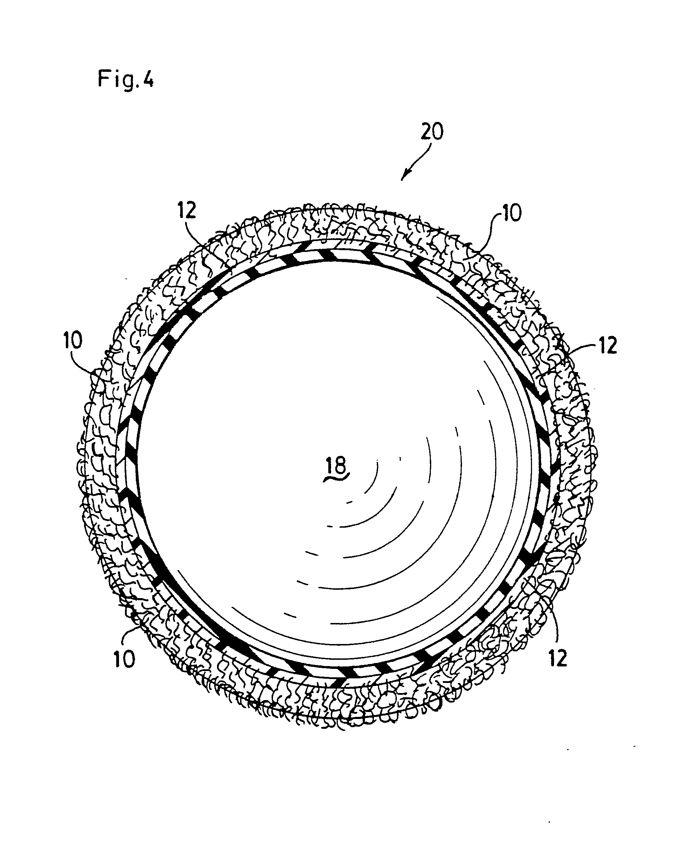

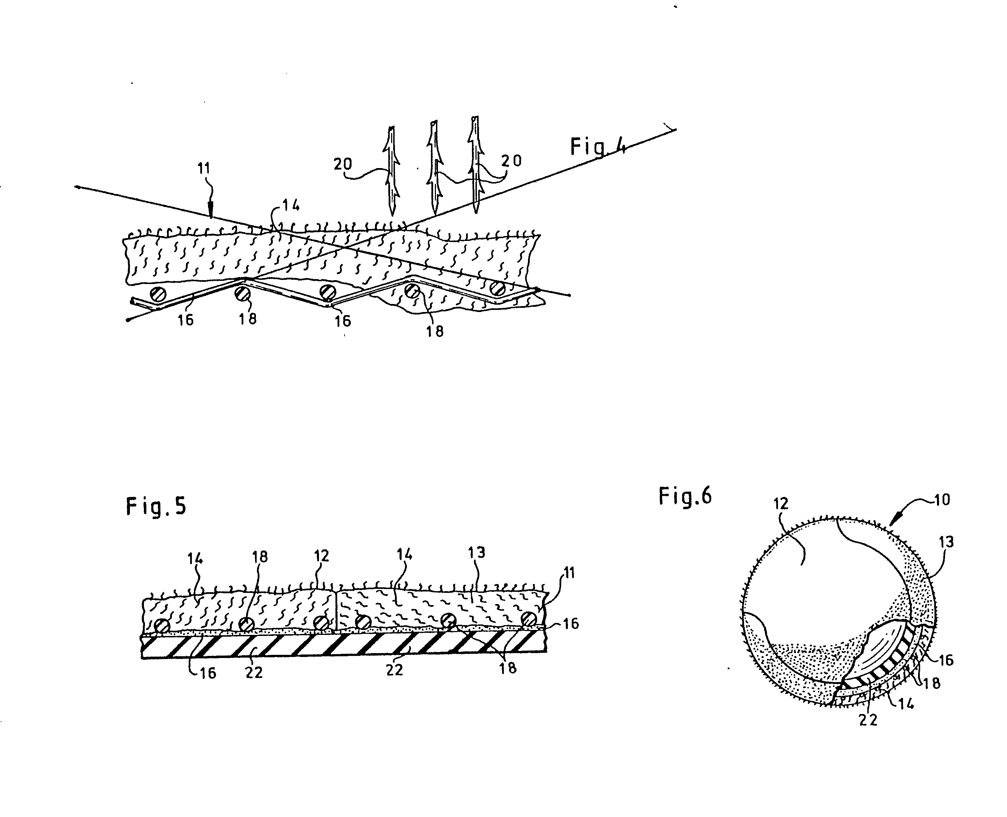

Figure 2 shows a tennis ball 10 covered with two identical cut pieces 12 and 13 of a textile fabric. Each piece 12, 13 has the dumbbell-shape of the piece 12 shown flat in Figure 3. The two dumbbell-shaped pieces interlock to form a sphere as shown in Figure 2 and as is appreciated by those skilled in the art. The cover pieces 12, 13 are cut from a textile fabric which includes yarns fabricated from a hot-melt adhesive composition. Referring to Figures 4 and 5, one may see a web 11 of non-woven, staple textile fibres 14 needled to a woven sheet which consists of warp yarns 16 and weft yarns 18. The nature of the weave is not important and it may be a simple, single ply weave or a multi-ply weave. Needled, composite fabrics employed as coverings for tennis balls are well known; see for example U.S. Patent No. 3,684,284. The techniques of needling non-woven webs of fibrous materials to woven fabrics are so well known that details need not be given here; see for example the disclosure of U.S. Patent No. 3,684,284. Generally, needling is accomplished on a needle loom with the use of barbed felting needles. The nature of the fibrous web 11 is not critical and those skilled in the art will know of fibrous webs imparting characteristics desired for the final product ball. Where the method of the present invention departs from conventional techniques as far as the cover pieces 12, 13 are concerned is that in this example the warp yarns 16 are formed from a hot-melt adhesive composition, for example the warp yarns 16 may be multi-filament, staple spun, or monofilament yarns of a hot-melt adhesive composition. Such yarns, convenient for weaving are well known. Examples of the hot melt compositions are polyepoxides, polyolefins, polyesters, polyamides, polyurethanes, ethylene vinyl acetate polymers, polyvinylidene chlorides,polyvinyl butyrals, vinyl chloride - acetate polymers, nitrile phenolic polymers, acrylic acid-based polymers, styrene-butadiene copolymers, cellulose-derived polymers, and blends thereof. If the yarns are to be melted subsequently by the application of dielectric heating as is described later in this particular example, the adhesive yarns must also have the appropriate electrical properties.

The hot-melt adhesive yarns 16 are selected to have relatively low melt temperatures, for example within the range of from 65° to 175°C. The weft yarns 18 may be fabricated from any material having a melting point substantially above the melting point of the yarns 16. Representative of the yarns 18 are polyester monofilaments of for example, polyethylene terephthalate.

The covering pieces 12, 13 described above and a conventional tennis ball core 22 are first provided. In the next step of the method, the cover pieces 12, 13 are assembled on the tennis ball core. In the assembly, the woven fabric or scrim side of the cover pieces 12, 13 are positioned in contact with the core surface.

The assembly of the covering on the core is carried out without the use of any separate adhesive applied directly to the core, as is done in the prior art method. The assembly can in general be carried out more easily if the dumbbell-shaped fabric pieces 12, 13 are preformed rather than being flat so that they conform more closely to the core. This preforming can be done by assembling the pieces around an insert core form in a mould and heating them briefly to allow the adhesive yarns 16 to soften and deform. After assuming a curved shape and cooling, the pieces are removed from the mould and are reassembled on the rubber core 22. While the best fit with the core 22 is achieved if the premoulding is done on a spherical form, an adequate fit can be achieved if the pieces 12, 13 are pre-shaped around a cylindrical form. This modification has the advantage that it can be carried out continuously by feeding the pieces 12, 13 around a heated cylindrical roller.

A seam adhesive for sealing the seam between the edges of the pieces 12 13 on the core 22 is used in the form of a separately applied extruded strip. The seam adhesive may be of the same composition as the yarns 16. It has been found that an extruded monofilament of seam adhesive with a triangular cross-section offers advantages over a circular cross-section seam strip since this shape with an apex of the triangle directed inwards gives good penetration of the seam material between the abutting edges of pieces 12, 13 of cover fabric, and at the same time gives the external surface of the seam material the necessary width. Other cross-section shapes, such as a T-section with the leg of the T directed inwards also achieve the same result. The seam adhesive strip may be assembled on the core 22 with the pieces 12, 13 or be applied later. Following the assembly of the tennis ball cover pieces 12, 13 on the tennis ball core 22, the assembled unit may be placed in an appropriate mould or jig to hold the cover pieces in position. The warp yarns 16 are then caused to melt by heating them to their melt temperature. The low melting point yarns 16 after melting will migrate to the interface between the tennis ball core 22 and the cover pieces 12, 13. In migrating to the interface, the molten yarns will impregnate the fabric of the cover pieces 12, 13 in the zone adjacent to the ball core 22 and will contact the core surface. Upon being allowed to cool, the melt from the molten yarns 16 will solidify and adhere the cover pieces 12, 13 to the tennis ball core. Generally, this adhesion is a strong, tenacious bond which firmly adheres the coverings 12, 13 to the core.

Melting of the hot-melt adhesive yarns 16 may be accomplished by the direct application of heat, by microwave energy, by radio-frequency energy or by other techniques. Preferably, melting is caused by the application of radio-frequency energy (RF). With RF heating the heating time can be reduced to less than one minute, compared with ten minutes that is more typical with conventional direct heating. This is attractive not only for the opportunity that it offers for increasing production rates, but also for the energy savings that can be realized. This reduces the bonding time to approximately one tenth of the prior art time taken. In addition, reduction of the heating time and more particularly reduction of the time of exposure of the cover pieces 12, 13 and the core 22 to heat within the temperature range ordinarily required to produce adhesion of the cover pieces 12, 13 to the core 22 provides a higher quality tennis ball. More specifically, tennis balls made with minimal exposure to high temperatures will exhibit better physical properties desired for playing than balls which have been exposed to such heat for as little as 10 to 15 minutes. The preferred tennis balls made in accordance with the invention with minimal thermal degradation, other things being equal, are structurally stronger, exhibit greater rebound energy and can be expected to have longer lives. The core materials continue to show better tensile and compressive strengths and the cover materials show better torsional modulus measurements in comparison with balls made similarly, but prepared under exposures to heat for prolonged periods of time.

If the adhesive yarns 16 are melted using RF or microwave radiation, it is necessary that the moulds be relatively transparent to radiation in the applied frequency ranges. In this way the energy absorbed is concentrated mainly in the workpiece and the process efficiency is improved. Polytetrafluoroethylene is ideal for use as a mould material since it combines low dielectric loss, good mechanical workability and excellent release behavior.

Proper design of the electrodes is a factor in the preferred use of RF radiation. If an assembled ball is placed in an RF field generated by two flat parallel opposed electrodes (perhaps the simplest possible electrode configuration), the heating effect is concentrated in an equatorial zone, since this zone has the greatest amount or area of core and adhesive yarns in a direction parallel to the electrode field. It is very difficult to produce a uniform distribution of energy absorption throughout the entire volume of material in a hollow dielectric sphere, but the depth of the equatorial zone of high absorption can be increased by appropriate electrode design. If the width of the dumbbell shaped cover pieces 12, 13 can be made equal to or greater than the width of the core then the long axes of the two interlocking cover pieces that make up the ball cover can be aligned in turn with the equatorial plane, and the cover can be completely bonded to the core in two passes through the RF field. The desired uniformity of heating can be achieved by rotating the ball through $90^o$ about an axis perpendicular to the field lines, between two passes through a fixed field; by actuating in turn each of two pairs of electrodes oriented so that their field lines are perpendicular to each other; by continuous rotation of the mould assembly; or by the provision of a rotating electric field.

Referring now to Figure 5, the structure of the final tennis ball, which is produced using the method of the invention, may be seen. The cover pieces 12 and 13, including the residual weft yarns 18 interlock with the needled fibres 14 of the non-woven web 11 and are adhered to the ball core 22 by the hot-melt adhesive residue of the melted and re-solidified yarns 16. The relationship of the various structural parts in the finished tennis ball made using the method of the invention may be seen in Figure 6.

Example 1

Dumbbell cut cover pieces for a tennis ball and a rubber core were provided. The cover pieces included as part of the base weave, a textile fabric including warp yarns of a hot-melt, polyamide adhesive having a melting point of circa $105^oC$. The weight of adhesive in the covering was from 12% to 32% of the total weight of the fabric covering. The cover pieces were assembled on the core in an appropriate mould and were heated under pressure at a temperature of $105^oC$. for 15 minutes. The ball was then allowed to cool to room temperature. Upon removal from the mould it was found that the ball covering was adhered to the core with a bond strength of circa 15 lbs. per inch. It was apparent that during heating the hot-melt polyamide adhesive yarns had melted and subsequently re-solidified upon cooling to form the bond.

CLAIMS

1.      A method of adhering a textile fabric tennis ball cover to a tennis ball core comprising providing a tennis ball core (22), providing a textile fabric tennis ball cover (12, 13) of a size and shape to fit closely around and cover the core (22), the fabric including adhesive yarns (16) fabricated from a hot-melt adhesive composition, fitting the cover (12, 13) around the core (22), causing the adhesive yarns (16) to melt and flow into contact with the cover (12, 13) and the core (22), and allowing the molten yarns to solidify, whereby the cover is adhered to the core.

2.      A method according to Claim 1, wherein the yarns (16) are caused to melt by radio frequency heating.

3.      A method according to Claim 1 or Claim 2, in which the cover is in two pieces and the edges of the two pieces are sealed together by placing a strip formed from the said hot-melt adhesive composition between the edges, causing the strip to melt at the same time as the adhesive yarns, and allowing the molten strip to solidify at the same time as the molten yarns.

4.      A tennis ball having a core and a cover which is adhered to the core by a method in accordance with any one of Claims 1 to 3.

# Fig.1 Prior Art

COVER FABRIC →(COMPONENT 1)→ COATED FABRIC →→ WASTE FABRIC + LATEX

2-PART LATEX ADHESIVE

COMPONENT 2

PINKY → COATED PINKY → EDGE COATED FABRIC

STACK + DIP → LATEX BATH

ASSEMBLE AND CURE IN HEATED MOLDS (~ 10 MIN.) → BALL

# Fig. 2

# Fig. 3

0013503

Fig.4

Fig.4

11

14

20    20

16    18    16    18

Fig.5

14    18    12    14    13    11

16    16    22    22    18    16

Fig.6

12    10    13    16    18    14    22

0013503

**European Patent Office**

**EUROPEAN SEARCH REPORT**

Application number

EP 79 30 2996

## DOCUMENTS CONSIDERED TO BE RELEVANT

| Category | Citation of document with indication, where appropriate, of relevant passages | Relevant to claim |
|---|---|---|
| | FR - A - 2 309 254 (DUNLOP LTD.) <br> * Figures 4,5; page 1, lines 34-37; page 2; page 3, lines 1-33; page 8, lines 30-37 * <br><br> ---- | 1,3,4 |

### CLASSIFICATION OF THE APPLICATION (Int. Cl. ³)

A 63 B 45/00
    39/08

### TECHNICAL FIELDS SEARCHED (Int.Cl. ³)

A 63 B

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 17-04-1980 | NOESEN |

EPO Form 1503.1   06.78